# EUROPÄISCHE PATENTSCHRIFT

(11) **EP 3 426 995 B1**
(45) Veröffentlichungstag und Bekanntmachung des Hinweises auf die Patenterteilung: **08.07.2020**
(21) Anmeldenummer: 17708758.2
(22) Anmeldetag: 03.03.2017
(51) Int. Cl.: F27B 1/02, C04B 2/12, F27B 1/04, F27B 1/24, F27B 1/26, F27B 1/28, F27D 19/00

(54) **ANLAGE MIT EINEM OFEN UND VERFAHREN ZUM BETREIBEN EINER SOLCHEN ANLAGE**
SYSTEM HAVING A FURNACE AND METHOD FOR OPERATING SUCH A SYSTEM
INSTALLATION DOTÉE D'UN FOUR ET PROCÉDÉ POUR FAIRE FONCTIONNER UNE TELLE INSTALLATION

(30) Priorität: 07.03.2016 DE 102016104076
(43) Veröffentlichungstag der Anmeldung: 16.01.2019
(73) Patentinhaber: Maerz Ofenbau AG, 8027 Zürich (CH); thyssenkrupp AG, 45143 Essen (DE)
(72) Erfinder: PIRINGER, Hannes, 5712 Beinwil am See (CH); BUCHER, Patrick, 5012 Schönenwerd (CH)
(74) Vertreter: thyssenkrupp Intellectual Property GmbH
(86) Internationale Anmeldenummer: PCT/EP2017/054991
(87) Internationale Veröffentlichungsnummer: WO 2017/153267

(56) Entgegenhaltungen:
- EP-A1- 2 478 314
- EP-A2- 1 555 251
- WO-A1-2015/018504
- FR-A1- 2 510 984

## Beschreibung

Die Erfindung betrifft ein Verfahren zum Betreiben einer Anlage, die einen Ofen umfasst, der zwei vertikale Schächte aufweist, die mittels eines Überströmkanals verbunden sind, wobei oberhalb des Überströmkanals jeweils mindestens ein Brenner derart angeordnet ist, dass dessen Brenngase im Brennbetrieb des jeweiligen Schachts nach unten strömen, und wobei unterhalb des Überströmkanals jeweils eine Zufuhr für ein Kühlgas vorgesehen ist, so dass in Kombination mit dem Betrieb eines Brenners in dem brennbetriebenen Schacht das nach unten strömende Brenngas beziehungsweise ein das Brenngas umfassendes Rauchgas durch das in diesem Schacht aufsteigende Kühlgas in Richtung des Überströmkanals umgelenkt wird. Die Erfindung betrifft weiterhin eine Anlage mit einem solchen Ofen.

Derartige Öfen (vgl. z.B. DE 30 38 927 C2, WO 2015/018504 A1, EP 2 478 314 B1 oder EP 1 555 251 A2), die auch als Gleichstrom-Gegenstrom-Regenerativ-Öfen oder mit der Kurzbezeichnung GGR-Öfen bezeichnet werden und zumeist zum Brennen von karbonathaltigem Brenngut, insbesondere Kalkstein, Dolomit oder Magnesit genutzt werden, arbeiten zyklisch, wobei ein Brennen des Brennguts stets nur in einem der Schächte erfolgt, während der andere Schacht als Regenerativschacht arbeitet, in dem das dortige Brenngut mittels des über den Überströmkanal aus dem aktuell brennbetriebenen Schacht zugeführten Rauchgases für den sich anschließenden Brennzyklus in diesem Schacht vorgewärmt wird. Das Brennen des Brennguts in dem brennbetriebenen Schacht erfolgt im Gleichstrom, indem das schwerkraftbedingt von oben nach unten durch den brennbetriebenen Schacht geförderte Brenngut mit Brenngas durchströmt wird, das von an den oberen Enden der Schächte angeordneten Brennern erzeugt wird. Eine Durchströmung des Brennguts in dem nicht-brennbetriebenen beziehungsweise regenerativ betriebenen Schacht erfolgt dagegen im Gegenstrom, wobei das über den Überströmkanal zugeführte Abgas am oberen Ende des regenerativ betriebenen Schachts abgeführt wird.

Konventionelle GGR-Öfen eignen sich wegen der relativ langen Verweilzeit des Brennguts in der Brennzone in Kombination mit den relativ geringen Brenntemperaturen von üblicherweise zwischen 800°C und 1000°C vorteilhaft für die Herstellung von Branntkalk mit hoher Reaktivität, sogenanntem Weichbrand-Kalk. Ein Nachteil von konventionellen GGR-Öfen mit direktem Überströmkanal ist, dass in dem Anfangsabschnitt der unterhalb des Überströmkanals gelegenen Kühlzone des brennbetriebenen Schachts eine teilweise Rekarbonisierung des Brennguts infolge der relativ intensiven Durchströmung mittels des aus der Brennzone stammenden Rauchgases kommt, das in diesem Bereich des brennbetriebenen Schachts in Richtung des Überströmkanals umgelenkt wird. Mit konventionellen GGR-Öfen sind daher derzeit bestenfalls Kalzinierungsgrade von 96% möglich.

Die FR 2 510 984 A1 offenbart ein Verfahren und eine Vorrichtung zum Brennen von Kalk mit einem Vorwärmer, einer Brennzone und einem Kühler, der mehrere Zyklonstufen umfasst.

Ausgehend von diesem Stand der Technik lag der Erfindung die Aufgabe zugrunde, eine Möglichkeit anzugeben, mit einem relativ hohen energetischen Wirkungsgrad ein Kalzinieren von karbonathaltigem Brenngut mit einem nahezu vollständigen Kalzinierungsgrad zu ermöglichen.

Diese Aufgabe wird mittels eines Verfahrens sowie einer Anlage gemäß den Patentansprüchen 1 und 7 gelöst. Bevorzugte Ausführungsformen des erfindungsgemäßen Verfahrens und vorteilhafte Ausgestaltungen der erfindungsgemäßen Anlage sind Gegenstände der weiteren Patentansprüche und ergeben sich aus der nachfolgenden Beschreibung der Erfindung.

Der Erfindung liegt der Gedanke zugrunde, das Brenngut in einem Ofen zu kalzinieren, der den grundsätzlichen Aufbau und damit auch die Vorteile, insbesondere hinsichtlich des energetischen Wirkungsgrad, eines GGR-Ofens aufweist, wobei jedoch verhindert werden soll, dass die Temperatur des Brennguts in den Schächten in denjenigen Bereichen der unterhalb des Überströmkanals gelegenen Kühlzonen, in denen das Brenngut noch im relevanten Ausmaß von Rauchgas durchströmt wird, soweit abfällt, dass diese Durchströmung zu einer relevanten Rekarbonisierung des Brennguts führt. Durch ein solches Verhindern einer Rekarbonisierung kann folglich vermieden werden, dass ein hoher Kalzinierungsgrad des Brennguts, der zuvor in der Brennzone realisiert werden konnte, wieder im relevanten Ausmaß reduziert wird, so dass im Ergebnis Brenngut hergestellt werden kann, dessen Kalzinierungsgrad ungefähr demjenigen entspricht, der in der Brennzone erreichbar ist. Dieser Kalzinierungsgrad kann im Wesentlichen vollständig sein und somit insbesondere größer 99% betragen.

Diesem Grundgedanken entsprechend ist ein Verfahren zum Betreiben einer Anlage mit einem Ofen vorgesehen, wobei der Ofen zumindest zwei vertikale Schächte umfasst, die mittels eines Überströmkanals verbunden sind, wobei oberhalb des Überströmkanals jeweils mindestens ein Brenner derart angeordnet ist, dass dessen Brenngase im Brennbetrieb des jeweiligen Schachts nach unten strömen, und wobei unterhalb des Überströmkanals jeweils eine Kühlgaszufuhr vorgesehen ist, so dass in Kombination mit dem Betrieb eines Brenners in dem brennbetriebenen Schacht das nach unten strömende Brenngas beziehungsweise ein das Brenngas umfassendes Rauchgas durch das in dem brennbetriebenen Schacht aufsteigende Kühlgas in Richtung des Überströmkanals umgelenkt wird. Erfindungsgemäß vorgesehen ist, dass die Zufuhr für das Kühlgas und insbesondere der Mengenstrom und/oder die Temperatur und/oder die Art des Kühlgases derart eingestellt wird/werden, dass die Temperatur zumindest des in dem brennbetriebenen Schacht, vorzugsweise auch des in dem regenerativ betriebenen Schacht von dem Brenngas beziehungsweise Rauchgas durchströmten Brennguts oberhalb von dessen Entsäuerungstemperatur gehalten wird.

Die Bezeichnung der Schächte des erfindungsgemäßen Ofens als "vertikal" erfordert erfindungsgemäß nicht zwangsläufig, dass diese beziehungsweise ihre Längsachsen auch eine exakt vertikale Ausrichtung aufweisen. Ausreichend soll vielmehr eine exakt vertikale Richtungskomponente der Ausrichtung sein, wobei im Hinblick auf einen vorteilhaften schwerkraftbedingten Transport des Brennguts in den Schächten ein Winkel zwischen der tatsächlichen Ausrichtung und der exakt vertikalen Ausrichtung von höchstens 30°, vorzugsweise höchstens 15° und besonders bevorzugt von möglichst 0° (exakt vertikale Ausrichtung) vorgesehen sein sollte.

Eine erfindungsgemäße Anlage mit einem Ofen, der zwei vertikale Schächte aufweist, die mittels eines Überströmkanals verbunden sind, wobei oberhalb des Überströmkanals jeweils mindestens ein Brenner derart angeordnet ist, dass dessen Brenngase im Brennbetrieb des jeweiligen Schachts nach unten strömen, und wobei unterhalb des Überströmkanals jeweils eine Kühlgaszufuhr angeordnet ist, so dass in Kombination mit dem Betrieb eines Brenners in dem brennbetriebenen Schacht das nach unten strömende Brenngas beziehungsweise Rauchgas durch das aufsteigende Kühlgas in Richtung des Überströmkanals umgelenkt wird, ist dem Grundgedanken der Erfindung entsprechend durch eine Steuerungsvorrichtung gekennzeichnet, die einen Betriebszustand für den Ofen vorsieht, bei dem eine Zufuhr von Kühlgas und insbesondere der Mengenstrom und/oder die Temperatur und/oder die Art des Kühlgases derart gesteuert und vorzugsweise geregelt wird/werden, dass die Temperatur zumindest des in dem brennbetriebenen Schacht, vorzugsweise auch des in dem regenerativ betriebenen Schacht von dem Brenngas durchströmten Brennguts oberhalb von dessen Entsäuerungstemperatur gehalten wird.

Um möglichst sicher eine Rekarbonisierung des Brennguts zu vermeiden kann vorzugsweise vorgesehen sein, dass die Temperatur zumindest des in dem brennbetriebenen Schacht unterhalb des Überströmkanals von dem Brenngas beziehungsweise Rauchgas durchströmten Brennguts oberhalb von 800°C gehalten wird. Die Steuerungsvorrichtung der erfindungsgemäßen Anlage kann hierzu einen entsprechenden Betriebszustand für den Ofen vorsehen.

Eine weitergehende Abkühlung des Brennguts in den sich unterhalb des Überströmkanals befindlichen Kühlzonen der Schächte auf Temperaturen unterhalb von 800°C sollte demnach erst in Abschnitten erfolgen, in denen das Brenngut infolge der bereits erfolgten Umlenkung des Brenngases beziehungsweise Rauchgases in Richtung des Überströmkanals (gilt für den brennbetriebenen Schacht) oder infolge der bereits erfolgten Umlenkung des Brenngases beziehungsweise Rauchgases in Richtung eines Auslasses für das Ofenabgas (gilt für den regenerativ betriebenen Schacht) nicht mehr in einem relevanten Maße von dem Brenngas beziehungsweise Rauchgas durchströmt wird.

Das erfindungsgemäße Verfahren und die erfindungsgemäße Anlage sehen somit im Vergleich zu einem konventionellen Betrieb von GGR-Öfen ebenfalls ein Kühlen des Brennguts in den Kühlzonen der Schächte vor, wobei die vorgesehene Kühlwirkung jedoch zumindest in den direkt unterhalb des Überströmkanals gelegenen Abschnitten der Kühlzonen verringert ist. Für ein schlussendlich ausreichendes Abkühlen des Brennguts kann es daher sinnvoll sein, die Länge der Kühlzonen der Schächte insgesamt entsprechend zu verlängern, um die Verweildauer des Brennguts in der Kühlzone zu erhöhen. Vorzugsweise kann auch vorgesehen sein, das Brenngut mit einer im Vergleich zu einem konventionellen Betrieb von GGR-Öfen relativ hohen Temperatur aus den Schächten abzuführen, weil auf diese Weise ermöglicht werden kann, einen konventionellen GGR-Ofen (auch) in erfindungsgemäßer Weise zu betreiben, ohne dass hierfür relevante strukturelle Änderungen erforderlich wären. Beispielsweise kann vorgesehen sein, das Brenngut aus den Schächten mit einer Temperatur von noch mindestens 200 °C und insbesondere von zwischen 200°C und 400°C abzuführen. Die Steuerungsvorrichtung kann hierfür einen entsprechenden Betriebszustand für den Ofen vorsehen. Im Vergleich dazu beträgt die Temperatur des Brennguts beim Abführen aus konventionell betriebenen GGR-Öfen in der Regel ca. 100°C. Ein abschließendes (aktives) Kühlen des Brennguts, insbesondere bis zum Erreichen einer solchen Zieltemperatur von ca. 100°C, kann bei einer erfindungsgemäßen Anlage beziehungsweise bei einem erfindungsgemäßen Betrieb einer solchen Anlage insbesondere in einem dem Ofen (vorzugsweise direkt) nachgeschalteten Nachkühler für das Brenngut erfolgen. Die Steuerungsvorrichtung der erfindungsgemäßen Anlage kann demnach einen Betriebszustand für den Nachkühler der Anlage vorsehen, bei dem das Brenngut in dem Nachkühler bis auf eine Temperatur von maximal 100°C gekühlt wird.

Da das Brenngut beim Überführen von den Schächten in den Nachkühler noch eine erhebliche Menge an Wärmeenergie speichert, kann zur Realisierung eines möglichst hohen Wirkungsgrads des erfindungsgemäßen Verfahrens beziehungsweise der erfindungsgemäßen Anlage vorgesehen sein, dass Abwärme des Nachkühlers rekuperierend genutzt wird. Die erfindungsgemäße Anlage kann hierzu entsprechende Mittel vorsehen.

Insbesondere kann vorgesehen sein, dass das Brenngut in dem Nachkühler zumindest auch mittels eines Kühlgases und insbesondere Kühlluft gekühlt wird, wobei dieses dann erwärmte Kühlgas (Abgas des Nachkühlers) anschließend als Verbrennungsgas in dem brennbetriebenen Schacht des Ofens genutzt wird, indem dieses zumindest teilweise zur Verbrennung mittels des entsprechenden Brenners mit einem diesem Brenner zugeführten Brennstoff vermischt wird. Die erfindungsgemäße Anlage kann hierfür eine oder mehrere Verbindungsleitungen umfassen, die einen Abgasauslass des Nachkühlers mit jeweils einer Verbrennungsgaszufuhr der Schächte verbinden. Dies kann ermöglichen, die Menge an für das Kalzinieren des Brennguts in dem brennbetriebenen Schacht erforderlichem Brennstoff zu reduzieren.

Alternativ oder zusätzlich kann das aus dem Nachkühler stammende Abgas auch auf andere Weise der Vorwärmung des Brennguts in dem Ofen dienen.

Wiederum alternativ oder zusätzlich kann das Abgas des Nachkühlers zumindest teilweise auch zur Erwärmung von dem Ofen zuzuführendem Brennstoff vorgesehen werden. Die erfindungsgemäße Anlage kann hierzu eine oder mehrere Verbindungsleitungen umfassen, die einen Abgasauslass des Nachkühlers mit einer Brennstoffzufuhr für die Brenner der Schächte verbinden. Dabei kann insbesondere auch vorgesehen sein, mittels eines Stroms des aus dem Nachkühler stammenden Abgases den Brennstoff zu trocknen. Dies kann beispielsweise in einer Brennstoffmühle erfolgen, die dem Ofen einer erfindungsgemäßen Anlage bezüglich der Förderrichtung des Brennstoffs vorgeschaltet ist.

Wiederum alternativ oder zusätzlich kann auch vorgesehen sein, das aus dem Nachkühler stammende Abgas zur Erzeugung von mechanischer und/oder elektrischer Leistung, beispielsweise mittels der Durchströmung einer sogenannten ORC-Turbine (ORC: Organic Rankine Cycle), zu nutzen. Die erfindungsgemäße Anlage kann hierzu eine Vorrichtung zur Wandlung von in dem Abgas des Nachkühlers gespeicherter thermischer Energie in mechanische und/oder elektrische Leistung umfassen, die über eine oder mehrere Verbindungsleitungen mit einem Abgasauslass des Nachkühlers verbunden ist.

Ein erfindungsgemäßes Verfahren und/oder eine erfindungsgemäße Anlage eignen sich in vorteilhafter Weise zur Herstellung von Brenngut und insbesondere Branntkalk mit einem Kalzinierungsgrad von > 99%. Als Ausgangsmaterial für das Brenngut kann insbesondere Kalkstein, Dolomit oder Magnesit eingesetzt werden.

Die Schächte des erfindungsgemäßen Ofens können vorzugsweise eine runde und insbesondere kreisförmige oder eine viereckige, insbesondere rechteckige, polygonartige oder quadratische Querschnittsform aufweisen. Andere Querschnittsformen, insbesondere andere eckige Querschnittsformen, sind jedoch ebenfalls vorteilhaft umsetzbar.

Die Erfindung wird nachfolgend anhand von in den Zeichnungen dargestellten Ausführungsbeispielen näher erläutert. In den Zeichnungen zeigt, jeweils in schematischer Darstellung:
- Fig. 1:: eine erfindungsgemäße Anlage mit einem Ofen gemäß einer ersten Ausgestaltung in einem Vertikalschnitt;
- Fig. 2:: Strömungsverhältnisse in dem Ofen gemäß der Fig. 1 während eines Brennbetriebs des links dargestellten Schachts;
- Fig. 3:: eine erfindungsgemäße Anlage mit einem Ofen und einem Nachkühler gemäß einer zweiten Ausgestaltung in einem Vertikalschnitt;
- Fig. 4:: eine erfindungsgemäße Anlage mit einem Ofen und einem Nachkühler gemäß einer dritten Ausgestaltung in einem Vertikalschnitt;
- Fig. 5:: eine erfindungsgemäße Anlage mit einem Ofen und einem Nachkühler gemäß einer vierten Ausgestaltung in einem Vertikalschnitt; und
- Fig. 6:: eine erfindungsgemäße Anlage mit einem Ofen und einem Nachkühler gemäß einer fünften Ausgestaltung in einem Vertikalschnitt .

Die in den Zeichnungen dargestellten Öfen 1 der erfindungsgemäßen Anlagen umfassen jeweils zwei vertikal ausgerichtete Schächte 2, die mittels eines in etwa auf einer Höhe zwischen dem unteren Drittel und der Hälfte der Längs- beziehungsweise Hocherstreckung der Schächte 2 angeordneten Überströmkanals 3 miteinander verbunden sind. Jeder der Schächte 2 weist an seinem oberen Ende, insbesondere in der oberen Stirnseite, eine nicht im Detail dargestellte Brenngutzufuhr 4 auf, die verschließbar ausgebildet ist. Weiterhin weist jeder der Schächte 2 an seinem unteren Ende, insbesondere in der unteren Stirnseite, einen ebenfalls nicht im Detail dargestellten Brenngutauslass 5 auf, der ebenfalls verschließbar ausgebildet ist. Zudem ist jeder der Schächte 2 mit einer Kühlgaszufuhr 6, die im Bereich des unteren Endes angeordnet ist und insbesondere in die jeweilige untere Stirnseite integriert sein kann, versehen. Im Bereich des oberen Endes umfasst jeder der Schächte 2 eine Mehrzahl von Brennern 7, die beispielsweise über die jeweilige Seitenwand in den dazugehörigen Schachtinnenraum geführte und darin um ca. 90° abgewinkelt ausgebildete Brennerlanzen aufweisen können. Die Brenneröffnungen der Brennerlanzen sind dadurch in Richtung des unteren Endes des jeweiligen Schachts 2 ausgerichtet.

Im Betrieb eines solchen Ofens 1 wird Brenngut entweder in dem brennbetriebenen Schacht 2 oder in dem regenerativ betriebenen Schacht oder gleichzeitig in beiden Schächten kontinuierlich oder intermittierend infolge eines gesteuerten Abzugs von der oben gelegenen Brenngutzufuhr 4 bis zu dem Brenngutauslass 5 transportiert. Dabei wird das Brenngut zunächst durch eine Vorwärmzone 8, die sich zwischen der Brenngutzufuhr 4 und ungefähr den Brenneröffnungen der Brenner 7 erstreckt und in der eine Vorwärmung des Brennguts erfolgen soll, und anschließend durch eine Brennzone 9, die sich ungefähr ausgehend von den Brenneröffnungen der Brenner 7 bis auf die Höhe des Überströmkanals 3 erstreckt, geführt. Ausgehend von dem Überströmkanal 3 schließt sich dann noch eine Kühlzone 10 an. Bei dem Transport des Brennguts durch diese Zonen werden die einzelnen Partikel des Brennguts somit zunächst in der Vorwärmzone 8 vorgewärmt, dann in der Brennzone 9 gebrannt und dabei bis zum Erreichen eines definierten Kalzinierungsgrads kalziniert. In der Kühlzone 10 erfolgt dann ein erstes Kühlen des Brennguts mittels eines den Schächten 2 über die Kühlgaszufuhren 6 zugeführten Kühlgases, bei dem es sich insbesondere um Kühlluft handeln kann. Die Kühlluft kann insbesondere aus der Umgebung angesaugt worden sein.

Das Brennen des Brennguts in der Brennzone 9 des brennbetriebenen Schachts 1 erfolgt durch die Erzeugung thermischer Energie mittels der Brenner 7, indem diesen ein flüssiger, gasförmiger und/oder pulverförmiger Brennstoff zugeführt wird. Dieser Brennstoff tritt stirnseitig aus den Brennern 7 aus und verbrennt dort mit einem Verbrennungsgas (insbesondere Verbrennungsluft). Das Verbrennungsgas kann dabei separat über eine Verbrennungsgaszufuhr 11 zugeführt werden. Möglich ist auch eine Zuführung über die Brennerlanzen selbst.

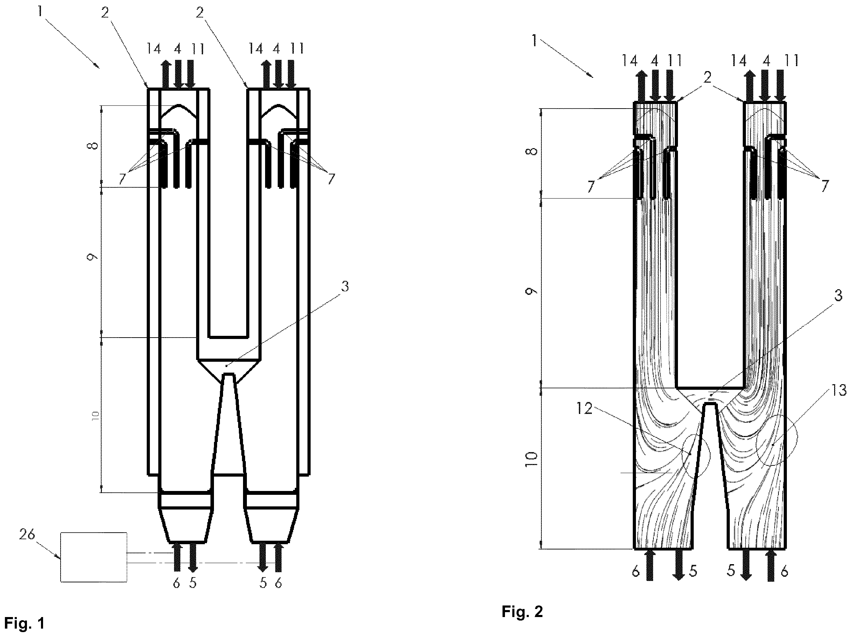

Das bei der Kalzinierung des Brennguts in der Brennzone 9 entstehende Rauchgas, das im Wesentlichen aus dem von den Brennern 7 erzeugten Brenngas und bei der Kalzinierung des Brennguts freigesetztem Kohlendioxid besteht, trifft in einem Abschnitt der Kühlzone 10, der sich von dem Überströmkanal 3 bis zu in etwa der halben Höhe der Kühlzone 10 erstreckt, mit dem Kühlgas, das das Brenngut ausgehend von der Kühlgaszufuhr 6 in Richtung zu dem Überströmkanal 3 durchströmt, zusammen (vgl. Fig. 2). Dadurch wird das Rauchgas in Richtung des Überströmkanals 3 umgelenkt und strömt gemeinsam mit dem dem brennbetriebenen Schacht zugeführten Kühlgas in den regenerativ betriebenen Schacht 2 über. Das in den regenerativ betriebenen Schacht 2 übergeströmte Rauchgas, das sich dann im Wesentlichen aus den Brenngasen der Brenner 7, dem bei der Kalzinierung des Brennguts in der Brennzone 9 freigesetzten Kohlendioxid und dem Kühlgas des brennbetriebenen Schachts 2 zusammensetzt, durchströmt dasjenige Brenngut, das innerhalb des regenerativ betriebenen Schachts 2 in einem Abschnitt unterhalb des Überströmkanals 3 sowie in dem gesamten Abschnitt oberhalb des Überströmkanals 3 angeordnet ist. Dadurch wird dieses Brenngut für ein Brennen in einem darauf folgenden Zyklus im Betrieb des Ofens 1, in dem der zuvor brennbetriebene Schacht 2 dann regenerativ und der zuvor regenerativ betriebene Schacht 1 brennbetrieben wird, vorgewärmt. Bei der Durchströmung des regenerativ betriebenen Schachts 2 vermischt sich das übergeströmte Rauchgas mit Kühlgas, das dem regenerativ betriebenen Schacht 2 über die dazugehörige Kühlgaszufuhr 6 zugeführt wurde.

Eine Durchströmung des bereits kalzinierten Brennguts in den beiden Schächten 2 innerhalb der jeweiligen Kühlzonen 10 durch das Rauchgas kann zu einer Rekarbonisierung des Brennguts führen, wenn dieses bereits eine relativ niedrige Temperatur von insbesondere kleiner als 800°C aufweist. Als besonders problematisch können sich dabei insbesondere die in der Fig. 2 mit den Bezugszeichen 12 und 13 gekennzeichneten Bereiche der Schächte 2 zeigen, weil in diesen Bereichen 12, 13 eine bereits ausgeprägte Kühlwirkung durch das Kühlgas mit einer noch intensiven Durchströmung des Brennguts durch das Rauchgas zusammenwirkt. Um auch in diesen Bereichen 12, 13 eine Rekarbonisierung des Brennguts weitgehend zu vermeiden ist erfindungsgemäß vorgesehen, die Kühlung des Brennguts durch das Kühlgas in den beiden Schächten 2 so einzustellen, dass auch dort und damit an jeder Stelle des Ofens 1, in dem eine intensive Durchströmung des Brennguts durch das Rauchgas erfolgt, eine Temperatur des Brennguts von mindestens 800°C gegeben ist. Dies erfolgt auf einfache Weise durch eine Regelung der den beiden Schächten 2 zugeführten Mengenströme des Kühlgases, die im Vergleich zu einem konventionellen Betrieb eines strukturell vergleichbaren GGR-Ofens, für den eine Kühlung derart vorgesehen ist, dass das Brenngut mit einer Temperatur von ca. 100°C aus den Schächten abgeführt wird, bei ansonsten unveränderten Kühlgasparametern (insbesondere Art und Temperatur des Kühlgases) um ca. 15% bis 20% reduziert ist. Eine Regelung der Zufuhr an Kühlgas über die Kühlgaszufuhren 6 erfolgt dabei mittels einer Steuerungsvorrichtung 26 der Anlage.

Das Ofenabgas, bestehend aus dem aus dem brennbetriebenen Schacht 2 übergeströmten Rauchgas und dem Kühlgas, das dem regenerativ betriebenen Schacht 2 zugeführt wurde, wird, nachdem es das Brenngut oberhalb des Überströmkanals 3 in dem regenerativ betriebenen Schacht 2 durchströmt hat, über einen zu diesem Schacht 2 zugehörigen Abgasauslass 14 abgeführt.

Infolge der relativ geringen Mengenströme des den beiden Schächten 2 zugeführten Kühlgases wird das Brenngut mit einer Temperatur von ca. 200°C bis 400°C aus den Schächten 2 abgeführt. Diese Abzugstemperatur liegt somit deutlich höher als die ca. 100°C, mit denen ein Abzug des Brennguts aus den Schächten 2 bei einem vergleichbaren Ofen, der konventionell betrieben wird, erfolgt. Um das aus dem Ofen 1 abgezogene Brenngut ausreichend schnell auf die für die weitere Verwendung schon geeignete Temperatur von ca. 100°C abzukühlen, kann dieses von dem Ofen 1 direkt in einen Nachkühler 15 überführt werden. Dabei kann ein Schleusensystem, dessen Schleusen beispielsweise hydraulisch, pneumatisch oder elektromotorisch bewegbar sind, zwischengeschaltet sein.

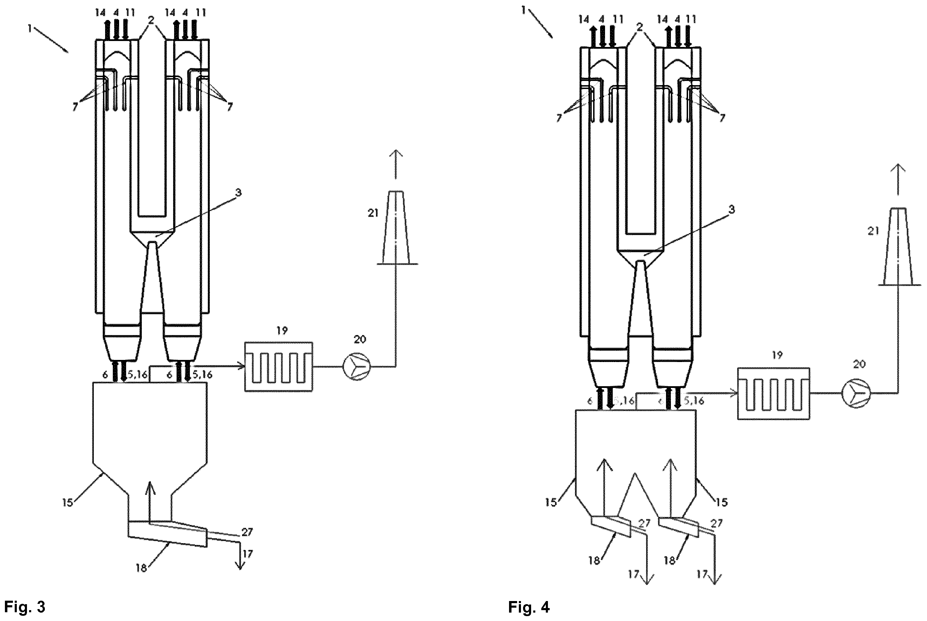

Die Fig. 3 bis 6 zeigen verschiedene Ausgestaltungen eines solchen Nachkühlers 15 einer erfindungsgemäßen Anlage. Sämtliche dieser Nachkühler 15 nutzen ein Kühlgas und insbesondere Kühlluft, das als Umgebungsluft aus der Umgebung angesaugt worden sein kann, zur weiteren Kühlung des Brennguts, wobei insbesondere eine direkte Kühlung, bei der das Brenngut von dem Kühlgas durchströmt wird, vorgesehen sein kann (vgl. Fig. 3 bis 5). Dem Vorteil einer besonders guten Kühlwirkung einer solchen direkten Kühlung steht dabei jedoch der Nachteil entgegen, das Abgas des Nachkühlers 15 in Abhängigkeit von der für dieses noch vorgesehenen Verwendung entstauben zu müssen, weil bei der Durchströmung des Brennguts Brenngutpartikel in einer relevanten Menge mitgerissen werden. Eine solche Entstaubung des Abgases des Nachkühlers 15 kann vermieden werden, wenn eine indirekte Kühlung vorgesehen wird, bei der das Kühlgas lediglich einen das Brenngut aufnehmenden Behälter umströmt.

Bei dem Nachkühler 15 gemäß der Fig. 3 bewegt sich das Brenngut schwerkraftbedingt ausgehend von mit den Brenngutauslässen 5 des Ofens 1 direkt verbundenen Brenngutzufuhren 16 des Nachkühlers 15 bis hin zu einem Brenngutauslass 17 des Nachkühlers 15, wobei es im Gegenstrom von dem beispielsweise im Bereich des Brenngutauslasses 17 des Nachkühlers 15 über eine Kühlgaszufuhr 27 zugeführten Kühlgas durchströmt wird. In den Brenngutauslass 17 des Nachkühlers 15 kann eine Fördervorrichtung integriert sein, die für ein kontinuierliches Abführen des Brennguts sorgt und beispielsweise in Form einer Schwingrinne 18 ausgeführt sein kann. Das am oberen Ende des Nachkühlers 15 abgeführte und durch einen Wärmeübergang von dem Brenngut erwärmte Abgas des Nachkühlers 15 wird anschließend in einem Staubfilter 19 entstaubt und mittels eines Abgasventilators 20 über einen Kamin 21 in die Atmosphäre abgeführt.

Die in der Fig. 4 dargestellte Anlage unterscheidet sich von derjenigen gemäß der Fig. 3 lediglich darin, dass für die beiden Schächte 2 des Ofens 1 jeweils ein separater Nachkühler 15 vorgesehen ist, wobei jeder der Nachkühler 15 separat mit Kühlgas versorgt wird. Die aus den beiden Nachkühlern 15 stammenden Ströme erwärmten Kühlgases (Abgas der Nachkühler 15) werden gemeinsam einem Staubfilter 19 zugeführt und durch die Wirkung eines Abgasventilator 20 über einen Kamin 21 abgeführt. Die Zufuhr an Kühlgas für die beiden Nachkühler 15 kann individuell steuerbar oder regelbar sein.

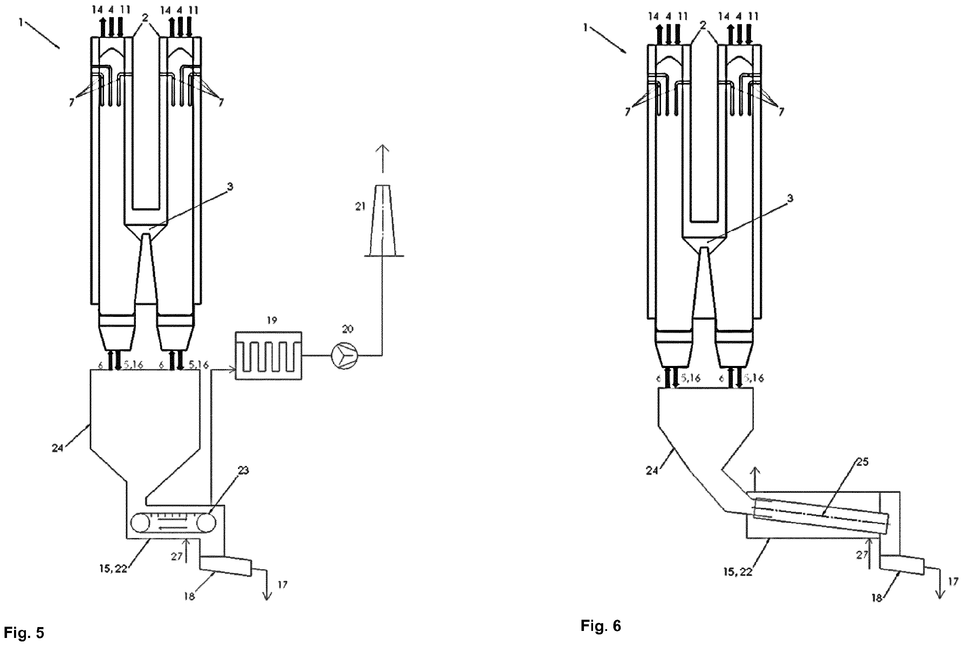

Der in der Fig. 5 dargestellte Nachkühler 15 umfasst einen Kühlabschnitt 22, innerhalb dessen eine von dem Kühlgas durchstrombare Fördervorrichtung 23 angeordnet ist, durch die das Brenngut ausgehend von dem Auslass eines dem Kühlabschnitt 22 vorgeschalteten Aufgabebunkers 24 in Richtung einer das Brenngut zu einem Brenngutauslass 17 fördernden Schwingrinne 18 (oder einer anderen Art von Fördervorrichtung) transportiert wird. Dabei wird das auf der Fördervorrichtung 23 angeordnete Brenngut von dem Kühlgas, das dem Kühlabschnitt 22 des Nachkühlers 15 in der Nähe des Auslasses des Aufgabebunkers 24 zugeführt wurde, durchströmt, wodurch dieses bis zum Erreichen einer Zieltemperatur von beispielsweise ca. 100°C abgekühlt wird. Das in der Nähe der Schwingrinne 18 wieder aus dem Kühlabschnitt 22 des Nachkühlers 15 abgeführte Kühlgas wird anschließend in einem Staubfilter 19 entstaubt und mittels eines Abgasventilators 20 über einen Kamin 21 abgeführt.

In dem Nachkühler gemäß der Fig. 6 ist ebenfalls ein Kühlabschnitt 22 mit einem vorgeschalteten Aufgabebunker 24 und einer nachgeschalteten Schwingrinne 18 (oder einer anderen Art von Fördervorrichtung) kombiniert. Innerhalb des Kühlabschnitts 22 befindet sich ein Drehrohr 25, d.h. ein drehend antreibbares Rohr, durch das das Brenngut gefördert werden kann, wobei das Rohr eine in Richtung seines Austragendes und somit in Richtung der Schwingrinne 18 nach unten geneigte Ausrichtung aufweist. Eine Förderung des Brennguts in dem Drehrohr 25 erfolgt somit schwerkraftbewirkt in Verbindung mit einer Bewegung des Brennguts innerhalb des Drehrohrs 25 infolge von dessen drehendem Antrieb. Das innerhalb des Drehrohrs 25 aufgenommene Brenngut kann dabei indirekt gekühlt werden, indem das Drehrohr 25 lediglich von dem Kühlgas umströmt wird, wie dies auch in der Fig. 6 dargestellt ist. Andererseits besteht auch die Möglichkeit, das Kühlgas durch das Innenvolumen des Drehrohrs 25 zu leiten, wodurch eine direkte Kühlung des darin aufgenommenen Brennguts erreicht wird. Die Führung des Kühlgases durch das Drehrohr könnte dabei vorzugsweise im Gegenstrom zu der Förderrichtung des Brennguts erfolgen. Ein sich aus einer indirekten Kühlung des Brennguts ergebender Vorteil liegt darin, dass auf eine Entstaubung des Kühlgases verzichtet werden kann und das Brenngut, insbesondere wenn dieses in Form von Branntkalk vorliegt, nicht mit dem Wasser (H₂O) der Kühlluft reagiert (Ca0+ F₂0 - >Ca(OH)₂).

Sofern die Temperatur des erwärmten Abgases eines Nachkühlers 15 einer erfindungsgemäßen Anlage zu hoch für einen diesem nachgeschalteten Staubfilter 19 oder eine alternativ genutzte Entstaubungsvorrichtung sein sollte, kann es sinnvoll sein, die Abgastemperatur auf einen maximal zulässigen Wert zu senken, indem beispielsweise dem Abgas relativ kalte Umgebungsluft zugemischt wird.

Neben einem Abführen des Abgases des Nachkühlers 15 an die Atmosphäre kann auch vorgesehen sein, die in diesem noch gespeicherte Wärmeenergie rekuperierend zu nutzen, indem dieses beispielsweise zumindest teilweise über die dazugehörige Verbrennungsgaszufuhr 11 als Verbrennungsgas dem brennbetriebenen Schacht 2 des Ofens 1 zugeführt wird. Zusätzlich oder alternativ dazu kann das Abgas des Nachkühlers 15 auch zum Vorwärmen und insbesondere auch zum Trocknen eines dem brennbetriebenen Schacht 2 zuzuführenden, insbesondere pulverförmigen Brennstoffs dienen. Hierzu kann das Abgas insbesondere durch eine Brennstoffmühle (nicht dargestellt) geleitet werden, in der es den Brennstoff, der darin auf eine für die Nutzung in dem Ofen 1 geeigneten Korngröße gemahlen wird, durchströmt. Weiterhin besteht die Möglichkeit, die in dem Abgas des Nachkühlers 15 noch gespeicherte Wärmeenergie zur Erzeugung von mechanischer und/oder elektrischer Leistung mittels beispielsweise einer ORC-Turbine (nicht dargestellt) zu nutzen.

### Bezugszeichenliste:

- 1: Ofen
- 2: Schacht
- 3: Überströmkanal
- 4: Brenngutzufuhr des Ofens
- 5: Brenngutauslass des Ofens
- 6: Kühlgaszufuhr des Ofens
- 7: Brenner
- 8: Vorwärmzone
- 9: Brennzone
- 10: Kühlzone
- 11: Verbrennungsgaszufuhr
- 12: Bereich im brennbetriebenen Schacht
- 13: Bereich im regenerativ betriebenen Schacht
- 14: Abgasauslass des Ofens
- 15: Nachkühler
- 16: Brenngutzufuhr des Nachkühlers
- 17: Brenngutauslass des Nachkühlers
- 18: Schwingrinne
- 19: Staubfilter
- 20: Abgasventilator
- 21: Kamin
- 22: Kühlabschnitt des Nachkühlers
- 23: Fördervorrichtung
- 24: Aufgabebunker
- 25: Drehrohr
- 26: Steuerungsvorrichtung
- 27: Kühlgaszufuhr des Nachkühlers

## Patentansprüche

1. Verfahren zum Betreiben einer Anlage mit einem Ofen (1), der mindestens zwei vertikale Schächte (2) umfasst, die mittels eines Überströmkanals (3) verbunden sind, wobei oberhalb des Überströmkanals (3) jeweils mindestens ein Brenner (7) derart angeordnet ist, dass dessen Brenngase im Brennbetrieb des jeweiligen Schachts (2) nach unten strömen, und wobei unterhalb des Überströmkanals (3) jeweils eine Kühlgaszufuhr (6) vorgesehen ist, so dass in Kombination mit dem Betrieb eines Brenners (7) in dem brennbetriebenen Schacht (2) das nach unten strömende Brenngas durch das in dem brennbetriebenen Schacht (2) aufsteigende Kühlgas in Richtung des Überströmkanals (3) umgelenkt wird, **dadurch gekennzeichnet, dass** eine Zufuhr von Kühlgas derart eingestellt wird, dass die Temperatur des zumindest in dem brennbetriebenen Schacht (2) von dem Brenngas durchströmten Brennguts oberhalb von dessen Entsäuerungstemperatur gehalten wird.

2. Verfahren gemäß Anspruch 1, **dadurch gekennzeichnet, dass** die Temperatur des zumindest in dem brennbetriebenen Schacht (2) von dem Brenngas durchströmten Brennguts oberhalb von 800°C gehalten wird.

3. Verfahren gemäß Anspruch 1 oder 2, **dadurch gekennzeichnet, dass** das aus den Schächten (2) ausgebrachte Brenngut in einen Nachkühler (15) überführt wird.

4. Verfahren gemäß Anspruch 3, **dadurch gekennzeichnet, dass** das Brenngut in den Schächten (2) mittels des Kühlgases bis auf eine Temperatur von minimal 200°C und insbesondere von zwischen 200°C und 400°C gekühlt wird und/oder das Brenngut in dem Nachkühler (15) bis auf eine Temperatur von maximal 100°C gekühlt wird.

5. Verfahren gemäß Anspruch 3 oder 4, **dadurch gekennzeichnet, dass** Abwärme des Nachkühlers (15) rekuperierend genutzt wird.

6. Verfahren gemäß Anspruch 5, **dadurch gekennzeichnet, dass** Abgas des Nachkühlers (15) als Verbrennungsgas in dem Ofen (1) und/oder zur Erwärmung von dem Ofen (1) zuzuführendem Brennstoff und/oder zur Erzeugung von mechanischer und/oder elektrischer Leistung genutzt wird.

7. Anlage mit einem Ofen (1), der mindestens zwei vertikale Schächte (2) aufweist, die mittels eines Überströmkanals (3) verbunden sind, wobei oberhalb des Überströmkanals (3) jeweils mindestens ein Brenner (7) derart angeordnet ist, dass dessen Brenngase im Brennbetrieb des jeweiligen Schachts (2) nach unten strömen, und wobei unterhalb des Überströmkanals (3) jeweils eine Kühlgaszufuhr (6) angeordnet ist, so dass in Kombination mit dem Betrieb eines Brenners (7) in dem brennbetriebenen Schacht (2) das nach unten strömende Brenngas durch das in dem brennbetriebenen Schacht (2) aufsteigende Kühlgas in Richtung des Überströmkanals (3) umgelenkt wird, **gekennzeichnet durch** eine Steuerungsvorrichtung (26), die einen Betriebszustand für den Ofen (1) vorsieht, bei dem eine Zufuhr von Kühlgas derart gesteuert wird, dass die Temperatur des zumindest in dem brennbetriebenen Schacht (2) von dem Brenngas durchströmten Brennguts oberhalb von dessen Entsäuerungstemperatur gehalten wird.

8. Anlage gemäß Anspruch 7, **dadurch gekennzeichnet, dass** die Steuerungsvorrichtung (26) einen Betriebszustand für den Ofen (1) vorsieht, bei dem die Temperatur des zumindest in dem brennbetriebenen Schacht (2) von dem Brenngas durchströmten Brennguts oberhalb von 800°C gehalten wird.

9. Anlage gemäß Anspruch 7 oder 8, **dadurch gekennzeichnet, dass** die Steuerungsvorrichtung (26) einen Betriebszustand für den Ofen (1) vorsieht, bei dem das Brenngut in den Schächten (2) mittels des Kühlgases bis auf eine Temperatur von minimal 200°C und insbesondere von zwischen 200°C und 400°C gekühlt wird.

10. Anlage gemäß einem der Ansprüche 7 bis 9, **gekennzeichnet durch** einen dem Ofen (1) nachgeschalteten Nachkühler (15) für das Brenngut.

11. Anlage gemäß Anspruch 10, **dadurch gekennzeichnet, dass** die Steuerungsvorrichtung (26) einen Betriebszustand für den Nachkühler (15) vorsieht, bei dem das Brenngut in dem Nachkühler (15) bis zum Erreichen einer Temperatur von maximal 100°C gekühlt wird.

12. Anlage gemäß Anspruch 10 oder 11, **gekennzeichnet durch** eine oder mehrere Verbindungsleitungen, die einen Abgasauslass des Nachkühlers (15) mit jeweils einer Verbrennungsgaszufuhr (11) der Schächte (2) und/oder mit einer Brennstoffzufuhr für die Brenner (7) der Schächte (2) und/oder mit einer Vorrichtung zur Wandlung von thermischer Energie von Abgas des Nachkühlers (15) in mechanische und/oder elektrische Leistung verbindet.

13. Verwendung eines Verfahrens gemäß einem der Ansprüche 1 bis 6 und/oder einer Anlage gemäß einem der Ansprüche 7 bis 12 zur Herstellung von Brenngut mit einem Kalzinierungsgrad von > 99%.

## Claims

1. Method of operating a plant having a furnace (1) comprising at least two vertical shafts (2) connected by means of an overflow duct (3), wherein at least one burner (7) is arranged above the overflow duct (3) in each case such that the burner gases therefrom flow downward in burning operation of the respective shaft (2), and wherein a cooling gas supply (6) is provided beneath the overflow duct (3) in each case such that, in combination with the operation of a burner (7) in the burner-operated shaft (2), the burner gas flowing downward is deflected in the direction of the overflow duct (3) by the cooling gas ascending in the burner-operated shaft (2), **characterized in that** a supply of cooling gas is adjusted such that the temperature of the burner charge through which the burner gas flows at least in the burner-operated shaft (2) is kept above the deacidification temperature thereof.

2. Method according to Claim 1, **characterized in that** the temperature of the burner charge through which the burner gas flows at least in the burner-operated shaft (2) is kept above 800°C.

3. Method according to Claim 1 or 2, **characterized in that** the burner charge discharged from the shafts (2) is transferred into an aftercooler (15).

4. Method according to Claim 3, **characterized in that** the burner charge is cooled in the shafts (2) by means of the cooling gas down to a temperature of not less than 200°C and especially of between 200°C and 400°C and/or the burner charge is cooled in the aftercooler (15) down to a temperature of not more than 100°C.

5. Method according to Claim 3 or 4, **characterized in that** waste heat from the aftercooler (15) is utilized by recuperation.

6. Method according to Claim 5, **characterized in that** offgas from the aftercooler (15) is utilized as combustion gas in the furnace (1) and/or for heating of fuel to be supplied to the furnace (1) and/or for generation of mechanical energy and/or electrical power.

7. Plant having a furnace (1) having at least two vertical shafts (2) connected by means of an overflow duct (3), wherein at least one burner (7) is arranged above the overflow duct (3) in each case such that the burner gases therefrom flow downward in burning operation of the respective shaft (2), and wherein a cooling gas supply (6) is disposed beneath the overflow duct (3) in each case such that, in combination with the operation of a burner (7) in the burner-operated shaft (2), the burner gas flowing downward is deflected in the direction of the overflow duct (3) by the cooling gas ascending in the burner-operated shaft (2), **characterized by** a control device (26) that provides for a state of operation for the furnace (1) in which a supply of cooling gas is controlled such that the temperature of the burner charge through which the burner gas flows at least in the burner-operated shaft (2) is kept above the deacidification temperature thereof.

8. Plant according to Claim 7, **characterized in that** the control device (26) provides for a state of operation for the furnace (1) in which the temperature of the burner charge through which the burner gas flows at least in the burner-operated shaft (2) is kept above 800°C.

9. Plant according to Claim 7 or 8, **characterized in that** the control device (26) provides for a state of operation for the furnace (1) in which the burner charge is cooled in the shafts (2) by means of the cooling gas down to a temperature of not less than 200°C and especially of between 200°C and 400°C.

10. Plant according to any of Claims 7 to 9, **characterized by** an aftercooler (15) for the burner charge connected downstream of the furnace (1).

11. Plant according to Claim 10, **characterized in that** the control device (26) provides for a state of operation for the aftercooler (15) in which the burner charge is cooled in the aftercooler (15) until attainment of a temperature of not more than 100°C.

12. Plant according to Claim 10 or 11, **characterized by** one or more connecting lines that connect an offgas outlet of the aftercooler (15) to a combustion gas supply (11) to the shafts (2) in each case and/or to a fuel supply for the burners (7) of the shafts (2) and/or to a device for conversion of thermal energy from offgas from the aftercooler (15) into mechanical energy and/or electrical power.

13. Use of a method according to any of Claims 1 to 6 and/or of a plant according to any of Claims 7 to 12 for production of burner charge having a calcination level of > 99%.

## Revendications

1. Procédé d'exploitation d'une installation dotée d'un four (1) comprenant au moins deux cuves verticales (2) reliées au moyen d'un carneau de trop-plein (3), dans lequel, au-dessus du carneau de trop-plein (3), au moins un brûleur (7) est disposé respectivement de telle sorte que les gaz combustibles de celui-ci descendent lorsque la cuve respective (2) fonctionne en mode combustion, et dans lequel, au-dessous du carneau de trop-plein (3), une arrivée de gaz de refroidissement (6) est prévue respectivement de sorte qu'en combinaison avec le fonctionnement d'un brûleur (7) dans la cuve (2) fonctionnant en mode combustion, le gaz combustible descendant est dévié en direction du carneau de trop-plein (3) par le gaz de refroidissement montant dans la cuve (2) fonctionnant en mode combustion, **caractérisé en ce qu'**un apport de gaz de refroidissement est réglé de telle sorte que la température des charges combustibles traversées par le gaz combustible au moins dans la cuve (2) fonctionnant en mode combustion est maintenue au-dessus de la température de désacidification de celles-ci.

2. Procédé selon la revendication 1, **caractérisé en ce que** la température des charges combustibles traversées par le gaz combustible au moins dans la cuve (2) fonctionnant en mode combustion est maintenue au-dessus de 800 °C.

3. Procédé selon la revendication 1 ou 2, **caractérisé en ce que** les charges combustibles défournées des cuves (2) sont transférées dans un refroidisseur final (15).

4. Procédé selon la revendication 3, **caractérisé en ce que** les charges combustibles dans les cuves (2) sont refroidies au moyen du gaz de refroidissement jusqu'à une température minimale de 200 °C et en particulier comprise entre 200 °C et 400 °C et/ou les charges combustibles sont refroidies dans le refroidisseur final (15) jusqu'à une température maximale de 100 °C.

5. Procédé selon la revendication 3 ou 4, **caractérisé en ce que** la chaleur dissipée du refroidisseur final (15) est exploitée par récupération.

6. Procédé selon la revendication 5, **caractérisé en ce que** les fumées du refroidisseur final (15) sont utilisées comme gaz de combustion dans le four (1) et/ou pour chauffer le combustible à amener au four (1) et/ou pour générer de la puissance mécanique et/ou électrique.

7. Installation dotée d'un four (1) comportant au moins deux cuves verticales (2) reliées au moyen d'un carneau de trop-plein (3), dans laquelle, au-dessus du carneau de trop-plein (3), au moins un brûleur (7) est disposé respectivement de telle sorte que les gaz combustibles de celui-ci descendent lorsque la cuve respective (2) fonctionne en mode combustion, et dans laquelle, au-dessous du carneau de trop-plein (3), une arrivée de gaz de refroidissement (6) est prévue respectivement de sorte qu'en combinaison avec le fonctionnement d'un brûleur (7) dans la cuve (2) fonctionnant en mode combustion, le gaz combustible descendant est dévié en direction du carneau de trop-plein (3) par le gaz de refroidissement montant dans la cuve (2) fonctionnant en mode combustion, **caractérisée par** un dispositif de commande (26) prévoyant un état de fonctionnement pour le four (1) dans lequel un apport de gaz de refroidissement est commandé de telle sorte que la température des charges combustibles traversées par le gaz combustible au moins dans la cuve (2) fonctionnant en mode combustion est maintenue au-dessus de la température de désacidification de celles-ci.

8. Installation selon la revendication 7, **caractérisée en ce que** le dispositif de commande (26) prévoit un état de fonctionnement pour le four (1) dans lequel la température des charges combustibles traversées par le gaz combustible au moins dans la cuve (2) fonctionnant en mode combustion est maintenue au-dessus de 800 °C.

9. Installation selon la revendication 7 ou 8, **caractérisée en ce que** le dispositif de commande (26) prévoit un état de fonctionnement pour le four (1) dans lequel les charges combustibles dans les cuves (2) sont refroidies au moyen du gaz de refroidissement jusqu'à une température minimale de 200 °C et en particulier comprise entre 200 °C et 400 °C.

10. Installation selon l'une quelconque des revendications 7 à 9, **caractérisée par** un refroidisseur final (15) pour les charges combustibles, placé en aval du four (1).

11. Installation selon la revendication 10, **caractérisée en ce que** le dispositif de commande (26) prévoit un état de fonctionnement pour le refroidisseur final (15) dans lequel les charges combustibles dans le refroidisseur final (15) sont refroidies jusqu'à ce qu'elles atteignent une température maximale de 100 °C.

12. Installation selon la revendication 10 ou 11, **caractérisée par** une ou plusieurs conduites de connexion reliant une sortie de fumées du refroidisseur final (15) à une arrivée de gaz de combustion (11) des cuves (2) et/ou à une arrivée de combustible pour brûleur (7) des cuves (2) et/ou à un dispositif pour convertir de l'énergie thermique provenant des fumées du refroidisseur final (15) en puissance mécanique et/ou électrique, respectivement.

13. Utilisation d'un procédé selon l'une quelconque des revendications 1 à 6 et/ou d'une installation selon l'une quelconque des revendications 7 à 12 pour produire des charges combustibles d'un degré de calcination > 99 %.
